# EUROPÄISCHE PATENTSCHRIFT

(11) **EP 0 575 931 B1**
(45) Veröffentlichungstag und Bekanntmachung des Hinweises auf die Patenterteilung: **15.10.1997**
(21) Anmeldenummer: 93109861.0
(22) Anmeldetag: 21.06.1993
(51) Int. Cl.: C08F 265/06, C08F 291/00, C09D 151/00

(54) **In Zweistufenfahrweise hergestellte Vinylpolymerisate und ihre Verwendung als Lackbindemittel**
Two-step vinyl polymers and their use as paint binders
Polymères vinyliques produits en deux étapes et leur utilisation comme liant de peinture

(30) Priorität: 25.06.1992 DE 4220807
(43) Veröffentlichungstag der Anmeldung: 29.12.1993
(73) Patentinhaber: BASF Aktiengesellschaft, 67063 Ludwigshafen (DE)
(72) Erfinder: Porsch, Bettina, Dr., D-6719 Eisenberg (DE); Renz, Hans, Dr., D-6701 Meckenheim (DE)

(56) Entgegenhaltungen:
- AU-A- 8 272 291
- US-A- 4 113 803

## Beschreibung

Die vorliegende Erfindung betrifft Vinylpolymerisate, erhältlich durch Polymerisation von Vinylmonomeren in mindestens zwei Stufen, wobei in der ersten Stufe 65 bis 80 Gew.-% der Vinylmonomeren in einem organischen Lösungsmittel oder in Substanz polymerisiert werden und in der zweiten Stufe 20 bis 35 Gew.-% der Vinylmonomeren in Gegenwart des in der ersten Stufe erhaltenen Vinylpolymeren ebenfalls in einem organischen Lösungsmittel oder in Substanz polymerisiert werden, mit der Maßgabe, daß die Polymerisation in der zweiten Stufe unter Bedingungen durchgeführt wird, bei denen sich für die Vinylmonomeren der zweiten Stufe in Abwesenheit des in der ersten Stufe erhaltenen Vinylpolymeren ein gegenüber dem Vinylpolymeren der ersten Stufe um mindestens 1000 höheres mittleres Molekulargewicht Mₙ ergibt und wobei die Polymerisation der Vinylmonomeren in der ersten Stufe bei einer Temperatur zwischen 130 und 250°C und die Polymerisation der Vinylmonomeren in der zweiten Stufe in Gegenwart des Vinylpolymeren der ersten Stufe bei einer Temperatur zwischen 80 und 200°C durchgeführt wird und die Temperatur in der ersten Stufe mindestens 25°C höher ist als in der zweiten Stufe.

Härtbare Bindemittel, sind von großer Bedeutung für die industrielle Lackierung, z.B. für die Serienlackierung von Automobilen und Haushaltsgeräten. Geeignete Bindemittel sind z.B. selbst- oder fremdvernetzende Acrylatpolymere, welche durch Polymerisation in organischer Lösung hergestellt werden. Um die Lösungsmittelmenge im Lack möglichst gering zu halten, sind Lösungen mit hohen Feststoffgehalten solcher Acrylatpolymeren wünschenswert.

Hohe Feststoffgehalte sind möglich, wenn die Acrylatpolymeren nur ein geringes Molekulargewicht aufweisen. Daraus formulierte "high solids"-Lacke sind z.B. aus der EP-A-225 808 und der EP-A-225 809 bekannt. Nachteilig bei diesen bisher bekannten high solids-Lacken ist jedoch die mangelnde Härte der damit hergestellten Beschichtungen.

Aus der EP-A-95 627 ist bekannt, Acrylatpolymere in 2-Stufenfahrweise herzustellen, um anwendungstechnische Eigenschaften der Bindemittel zu optimieren.

Die Polymerisate der beiden Stufen werden dabei so gewählt, daß sie bei getrennter einstufiger Herstellung im Gemisch ein Zweiphasensystem ausbilden würden. Auch mit diesem Verfahren kann die gewünschte Kombination aus hohem Feststoffgehalt der Bindemittellösungen und hoher Härte der erhaltenen Beschichtungen nicht erreicht werden. Lediglich in Beispiel 2 in EP 95 627 ist die Temperatur in der 1. Stufe höher als in der 2. Stufe.

Aus der US-A-4 113 803 sind Zweistufenpolymerisate bekannt, bei denen die Polymerisationstemperatur in der 1. Stufe 70 bis 90°C und in der 2. Stufe 60 bis 120°C beträgt.

Aus der AU-A-82 722 (91) sind Zweistufenpolymerisate bekannt, bei denen die Polymerisationstemperatur in der 1. Stufe 75 bis 90°C beträgt und in der 2. Stufe 3 bis 12°C niedriger ist.

Aufgabe der vorliegenden Erfindung waren daher Vinylpolymerisate, die, insbesondere aufgrund ihrer geringen Viskosität für Bindemittellösungen bzw. Lacke mit hohem Feststoffgehalt geeignet sind und Beschichtungen mit hoher Härte ergeben.

Demgemäß wurden die eingangs definierten Vinylpolymerisate, ein Verfahren zu ihrer Herstellung sowie ihre Verwendung als Lackbindemittel gefunden.

Die Polymerisation der Vinylmonomeren in den einzelnen Stufen erfolgt durch Substanz- cder bevorzugt Lösungspolymerisation.

Bei der Lösungspolymerisation wird die Polymerisation der Vinylmonomeren in einem Lösungsmittel durchgeführt. Sowohl die Vinylmonomeren als auch das erhaltene Vinylpolymerisat sind in dem Lösungsmittel löslich.

Als Lösemittel können übliche inerte Lösemittel für die Lösungspolymerisation eingesetzt werden. Bevorzugt eignen sich solche organischen Lösemittel, die dann später auch in den fertigen Überzugsmitteln eingesetzt werden. Beispiele für solche Lösemittel sind: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; und Ketone, wie Methylethylketon, Methylisobutylketon, Diisobutylketon, Cyclohexanon, Isophoron. Aromatische Kohlenwasserstoffe, wie Xylol, Solvesso® 100 (aromatische Kohlenwasserstoffgemische von vorwiegend C₁-C₄-Alkylbenzolen) und aliphatische Kohlenwasserstoffe werden vorzugsweise im Verschnitt mit den oben genannten Lösemitteln eingesetzt.

Die radikalische Polymerisation kann thermisch und/oder in Gegenwart eines geeigneten Initiators durchgeführt werden.

Geeignete Initiatoren sind vorzugsweise in den Vinylmonomeren oder dem Lösungsmittel löslich. Genannt seien z.B. Azoverbindungen oder Peroxide wie tertiär-Butylperbenzoat, tertiär-Butylperoktoat, tertiär-Butylperpivalat oder di-tertiär-Butylperoxid.

Das Molekulargewicht der Vinylpolymerisate kann in bekannter Weise durch Zusatz von Reglern, insbesondere von Mercaptanen, Wahl der Polymerisationstemperatur oder Initiatormenge eingestellt werden (Houben-Weyl, Methoden der Org. Chemie, 4. Aufl., Band 14/1, S. 24-255, 1961). Mit steigender Temperatur, zunehmender Menge an Regler oder Initiator nimmt das Molekulargewicht der Vinylpolymerisate bekannterweise ab.

Die erfindungsgemäßen Vinylpolymerisate sind erhältlich durch Polymerisation in mindestens zwei Stufen, vorzugsweise in zwei Stufen.

Bei der Polymerisation der Vinylmonomeren der ersten Stufe kann z.B. so verfahren werden, daß ein Teil der Vinylmonomeren und/oder des Lösungsmittels vorgelegt werden und die verbleibende Menge der Vinylmonomeren und des Lösungsmittels zusammen mit der notwendigen Initiatormenge während der Polymerisation zudosiert werden.

Vorzugsweise werden die Vinylmonomeren der ersten Stufe bis zu mindestens 70 %, vorzugsweise mindestens 95 % auspolymerisiert.

Die Polymerisation der Vinylmonomeren der zweiten Stufe wird in Gegenwart des in der ersten Stufe erhaltenen Vinylpolymerisats durchgeführt.

Geeigneterweise werden die Vinylmonomeren, sowie noch notwendige Mengen Lösungsmittel und Initiator einer Vorlage zudosiert, welche das gelöste Vinylpolymer der 1. Stufe enthält. Insbesondere wird als Vorlage die direkt nach Beendigung der Polymerisation in der 1. Stufe erhaltene Reaktionslösung verwendet.

Die Polymerisation der Vinylmonomeren in der zweiten Stufe wird derart vorgenommen, daß ein entsprechend in der Abwesenheit der ersten Stufe hergestelltes Vinylpolymerisat ein mittleres Molekulargewicht Mₙ aufweist, das um mindestens 1000, vorzugsweise mindestens 3000, insbesondere bevorzugt mindestens 5000 höher ist als das Vinylpolymerisat der ersten Stufe.

Das mittlere Molekulargewicht Mₙ der ersten Stufe liegt vorzugsweise zwischen 500 und 20 000, besonders bevorzugt zwischen 500 und 5000.

Die Polymerisation der Monomeren der zweiten Stufe wird so vorgenommen, daß das mittlere Molekulargewicht Mₙ bei angenommener Polymerisation in Abwesenheit des Vinylpolymerisats der 1. Stufe vorzugsweise zwischen 2000 und 100 000, besonders bevorzugt zwischen 3000 und 20 000 liegt.

Bei der Polymerisation der Vinylmonomeren der zweiten Stufe in Gegenwart der ersten Stufe kann es insbesondere auch zu Pfropfpolymerisaten kommen.

Das nach Beendigung der zweiten Stufe erhaltene Vinylpolymerisat weist daher im allgemeinen nicht eine rein bimodale Verteilung auf, wie sie genau den mittleren Molekulargewichten der getrennt hergestellten einzelnen Stufen entsprechen würde. Die Molekulargewichtsverteilung des Vinylpolymerisats zeigt im allgemeinen ein deutliches Maximum bei tieferen Molekulargewichten, welches weitgehend der 1. Stufe entspricht. Zu höheren Molekulargewichten können mehrere Nebenmaxima auftreten, welche eine insgesamt breite Molekulargewichtsverteilung bewirken.

Im Gegensatz zu Polymerisaten, die entweder niedermolekular und eng verteilt oder hochmolekular und breit verteilt sind, ist bei den erfindungsgemäßen Vinylpolymerisaten ein niederes Molekulargewicht mit einer deutlich breiteren Verteilung charakteristisch.

Das mittlere Molekulargewicht Mₙ des nach der zweiten Stufe erhaltenen Vinylpolymerisats beträgt vorzugsweise 2000 bis 40 000 und besonders bevorzugt 3000 bis 15 000. Die largewichtsverteilung des Vinylpolymerisats liegt insbesondere zwischen Werten M_{w}/Mₙ (Gewichtsmittel des Molekulargewichts/Zahlenmittel des Molekulargewichts) von 3,0 bis 12,0, besonders bevorzugt 3,0 bis 7,0.

Die Polymerisationsbedingungen in den beiden Stufen zur Einstellung des Molekulargewichts unterscheiden sich insbesondere in der Polymerisationstemperatur.

Die Polymerisationstemperatur in der ersten Stufe liegt zwischen 130 und 250°C, bevorzugt zwischen 170 und 210°C.

Die Polymerisationstemperatur in der zweiten Stufe liegt zwischen 80 und 200°C, bevorzugt zwischen 120 und 160°C, wobei die Polymerisationstemperatur in der 1. Stufe um mindestens 25°C, bevorzugt um mindestens 40°C höher ist als in der 2. Stufe.

Der Anteil der Vinylmonomeren, die in der ersten Stufe polymerisiert werden, beträgt 65 bis 80 Gew.-%, derjenigen in der zweiten Stufen 20 bis 35 Gew.-%, bezogen auf das gesamte Vinylpolymerisat.

Die Zusammensetzung der Vinylmonomeren in den einzelnen Stufen kann gleich oder verschieden sein.

Bei den Vinylmonomeren kann es sich z.B. vorwiegend um Alkylester der Acryl- oder Methacrylsäure mit 1 bis 20 C-Atomen im Alkylrest, Vinylester von 1 bis 20 C-Atome enthaltenden Carbonsäuren, Vinylaromaten mit bis zu 20 C-Atomen, ethylenisch ungesättigte Nitrile mit 3 bis 6 C-Atomen oder Vinylhalogenide oder Gemische dieser Monomere handeln.

Insbesondere im Hinblick auf eine Verwendung als Lackbindemittel handelt es sich bei dem Vinylpolymerisat vorzugsweise um ein Polyacrylat, welches sich zusammensetzt aus

| | | |
|---|---|---|
| a) | 10 bis 100 Gew.-% | C₁-C₂₀-Alkyl(meth)acrylate |
| b) | 0 bis 50 Gew.-% | Vinylmonomeren mit mindestens einer Hydroxy-, Epoxy-, Carbonsäure-, Carbonsäureanhydrid-, Carbonyl-, Amino- oder Amidogruppe |
| c) | 0 bis 90 Gew.-% | von a) und b) verschiedenen Vinylmonomeren. |

Vorzugsweise setzt sich das Acrylatpolymer aus 50 bis 95 Gew.-% a), 5 bis 40 Gew.-% b) und 0 bis 45 Gew.-% c) und besonders bevorzugt aus 50 bis 80 Gew.-% a), 20 bis 40 Gew.-% b) und 0 bis 30 Gew.-% c) zusammen.

Monomere a) sind vorzugsweise C₁-C₈-, besonders bevorzugt C₁-C₄-Alkyl(meth)acrylate.

Ein Gehalt an Monomeren b) wird z.B. notwendig, wenn das Acrylatpolymere vernetzbar oder selbstvernetzbar sein soll.

Selbstvernetzbare Acrylatpolymere enthalten z.B. N-Methylol(meth)acrylamid, welches über die Methylolgruppen mit sich selbst kondensiert.

Monomere, die eine Vernetzungsfähigkeit des Acrylpolymeren bewirken können, sind insbesondere:

C₁-C₁₀-Hydroxyalkyl(meth)acrylate, Glycidyl(meth)acrylat, (Meth)acrylsäure, Maleinsäure, (Meth)acrylamid, Acetoacetyl(meth)acrylat, Acetoacetoxyethyl(meth)acrylat, N-Alkylaminoalkyl (meth) acrylat, z.B. N-Ethylaminoethyl (meth)acrylat und Carbonsäureanhydride, z.B. Maleinsäureanhydrid.

Als Vernetzer für solche vernetzungsfähigen Acrylatpolymere seien z.B. Aminoharze, Epoxidharze, Polyisocyanate und Polyhydrazide genannt.

Weitere Monomere c) sind insbesondere Vinylaromaten mit bis zu 20 C-Atomen, vorzugsweise Styrol oder α-Methylstyrol.

Insbesondere werden die Monomere so gewählt, daß das erhaltene Vinylpolymer eine Glasübergangstemperatur zwischen -45 und +30°C, besonders bevorzugt zwischen -20 und +10°C hat. Die Glastemperatur läßt sich nach üblichen Methoden, z.B. aus der Messung des E-Moduls im Kriechversuch als Funktion der Temperatur oder mit der Differentialthermoanalyse (DTA) bestimmen (s. dazu A. Zosel, Farbe und Lack 82 (1976), 125-134).

Die erfindungsgemäßen Vinylpolymerisate eignen sich insbesondere für Beschichtungsmittel, bevorzugt als Lackbindemittel. Unter anderem aufgrund ihrer relativ geringen Viskosität erzielen die Lösungen bei gleicher Verarbeitungsviskosität höhere Feststoffgehalte im Lack. Die erhaltenen Beschichtungen z.B. auf Holz, Metall, Kunststoff und Papier weisen ein gutes Härte/Flexibilitäts-Verhältnis auf.

Weiterhin können die Vinylpolymerisate auch als Bindemittel in Klebstoffen Verwendung finden.

Als Lösungsmittel für die Lackbindemittel eignen sich insbesondere die oben als Lösungsmittel bei der Herstellung der Vinylpolymerisate genannten. Weitere Lösungsmittel sind auch flüssige Polyester, Polyether sowie ethylenisch ungesättigte Verbindungen als Reaktivverdünner. Bei der Verwendung als Lack können diese Lösungen übliche lacktechnische Zusatzstoffe enthalten, z.B. Verlaufhilfsmittel, Pigmente, Farbstoffe, Lichtschutzmittel oder gegebenenfalls auch einen Vernetzer im Falle vernetzbarer Vinylpolymerisate enthalten.

Der Feststoffgehalt der Lösungen im Falle einer Verwendung als Lack beträgt vorzugsweise zwischen 30 und 95 Gew.-%.

### Beispiele

Prozente sind Gewichtsprozente

### Vergleichsbeispiele V1 und V2 (einstufig)

### V1

Monomere: 28.0 % Methylmethacrylat (MMA); 27.0 % Hydroxyethylacrylat ethylacrylat (HEA); 0.5 % Acrylsäure (AS); 34.5 % (n-BA); 10.0 % Styrol (S)
Initiator: 3.0 % tertiär-Butylperoktoat (t-BPO); 0.5 % tertiär-Butylperbenzoat (t-BPB)
Lösungsmittel: Butylacetat
Vorlage: 600.0 g Butylacetat

| Menge Zulauf 1: | Menge Zulauf 2: |
|---|---|
| 560.0 g Methylmethacrylat | 287.0 g Butylacetat |
| 540.0 g Hydroxyethylacrylat | 10.0 g Butylperbenzoat |
| 10.0 g Acrylsäure | 60.0 g t-Butylperoktoat |
| 690.0 g n-Butylacrylat | |
| 200.0 g Styrol | |

Die Vorlage wurde auf 120°C erhitzt und bis Zulaufbeginn mit Stickstoff gespült. Zulauf 1 wurde dann in 150 Minuten, Zulauf 2 in 165 Minuten bei einer Polymerisationstemperatur von 140°C zugefahren. Anschließend wurde noch 120 Minuten nachpolymerisiert.

### V2

Monomere: 28.0 % MMA; 27.0 % HEA; 0.5 % AS; 34.5 % n-BA; 10.0 % S
Initiator: 1.5 % Di-tertiär-Butylperoxid (Di-tBP); 1.0 % t-BPO
Lösungsmittel: Butylacetat
Vorlage: 800.0 g Butylacetat

| Menge Zulauf 1: | Menge Zulauf 2: | Menge Zulauf 3: |
|---|---|---|
| 828.0 g n-Butylacrylat | 200.0 g Butylacetat | 55.0 g Butylacetat |
| 648.0 g Hydroxyethylacrylat | 36.0 g Di-t-Butylperoxid | 24.0 g t-Butylperoktoat |
| 672.0 g Methylmethacrylat | | |
| 12.0 g Acrylsäure | | |
| 240.0 g Styrol | | |

Die Vorlage wurde auf 170°C erhitzt und Zulauf 1 in 150 Minuten und Zulauf 2 in 210 Minuten bei einer Polymerisationstemperatur von 200°C zugefahren. Anschließend wurde noch 30 Minuten nachpolymerisiert, dann auf 120°C abgekühlt und Zulauf 3 in 60 Minuten zugefahren. Anschließend wurde noch 60 Minuten bei 120°C nachpolymerisiert.

### Vergleichsbeispiele V3 bis V5 (Mischungen der Einstufenpolymerisate)

Die in den Vergleichsbeispielen V1 und V2 erhaltenen Lösungen wurden wie folgt gemischt:
V3: 300 g V1 und 700 g V2
V4: 500 g V1 und 500 g V2
V5: 700 g V1 und 300 g V2

### Vergleichsbeispiele V6 bis V8 (zweistufig, 1. Stufe höhermolekular)

### V6 (30 % V1 vorgelegt)

Monomere insgesamt: 34.5 % n-BA; 27.0 % HEA; 28.0 % MMA; 0.5 % AS; 10.0 % S
Initiator: 1.5 % Di-tBP; 1.0 % t-BPO
Lösungsmittel: Butylacetat
Vorlage: 860.0 g V1
   350.0 g Butylacetat

| Menge Zulauf 1: | Menge Zulauf 2: | Menge Zulauf 3: |
|---|---|---|
| 483.0 g n-Butylacrylat | 200.0 g Butylacetat | 65.0 g Butylacetat |
| 378.0 g Hydroxyethylacrylat | 21.0 g Di-t-Butylperoxid | 14.0 g t-Butylperoktoat |
| 392.0 g Methylmethacrylat | | |
| 7.0 g Acrylsäure | | |
| 140.0 g Styrol | | |

Die Vorlage wurde auf 162°C erhitzt und Zulauf 1 in 150 Minuten und Zulauf 2 in 210 Minuten bei einer Polymerisationstemperatur von 200°C zugefahren. Danach wurde noch 30 Minuten nachpolymerisiert, auf 120°C abgekühlt, Zulauf 3 in 60 Minuten zugegeben und weitere 30 Minuten bei 120°C nachpolymerisiert.

### V7 (50 % V1 vorgelegt)

Monomere insgesamt: 34.5 % n-BA; 27.0 % HEA; 28.0 % MMA; 0.5 % AS; 10.0 % S
Initiator: 1.5 % Di-tBP; 1.0 % t-BPO
Lösungsmittel: Butylacetat
Vorlage: 1140.0 g V1
   150.0 g Butylacetat

| Menge Zulauf 1: | Menge Zulauf 2: | Menge Zulauf 3: |
|---|---|---|
| 276.0 g n-Butylacrylat | 150.0 g Butylacetat | 50.0 g Butylacetat |
| 216.0 g Hydroxyethylacrylat | 12.0 g Di-t-Butylperoxid | 8.0 g t-Butylperoktoat |
| 224.0 g Methylmethacrylat | | |
| 4.0 g Acrylsäure | | |
| 80.0 g Styrol | | |

Die Durchführung entsprach V6.

### V8 (70 % V1 vorgelegt)

Monomere insgesamt: 34.5 % n-BA; 27.0 % HEA; 28.0 % MMA; 0.5 % AS; 10.0 % S
Initiator: 1.5 % Di-tBP; 1.0 % t-BPO
Lösungsmittel: Butylacetat
Vorlage: 1500.0 g V1

| Menge Zulauf 1: | Menge Zulauf 2: | Menge Zulauf 3: |
|---|---|---|
| 155.3 g n-Butylacrylat | 150.0 g Butylacetat | 50.0 g Butylacetat |
| 121.5 g Hydroxyethylacrylat | 6.8 g Di-t-Butylperoxid | 4.5 g t-Butylperoktoat |
| 126.0 g Methylmethacrylat | | |
| 2.2 g Acrylsäure | | |
| 450.0 g Styrol | | |

Die Durchführung entsprach V6.

### Vergleichsbeispiele V9 und V10 Beispiel B3 (zweistufig, 2. Stufe höhermolekular)

### V9 (30 % V2 vorgelegt)

Monomere insgesamt: 28.0 % MMA; 27.0 % HEA; 0.5 % AS; 34.5 % n-BA; 10.0 % S
Initiator: 3.0 % t-BPO; 0.5 % t-BPB
Lösungsmittel: Butylacetat
Vorlage: 600.0 g V2
   200.0 g Butylacetat

| Menge Zulauf 1: | Menge Zulauf 2: |
|---|---|
| 274.4 g Methylmethacrylat | 235.0 g Butylacetat |
| 264.6 g Hydroxyethylacrylat | 4.9 g t-Butylperbenzoat |
| 4.9 g Acrylsäure | 29.4 g t-Butylperoktoat |
| 338.1 g n-Butylacrylat | |
| 98.0 g Styrol | |

Die Vorlage wurde auf 120°C erhitzt und Zulauf 1 in 150 Minuten und Zulauf 2 in 165 Minuten bei einer Polymerisationstemperatur von 140°C zugefahren. Anschließend wurde 120 Minuten bei 140°C nachpolymerisiert.

### V10 (50 % V2 vorgelegt)

Monomere insgesamt: 28.0 % MMA; 27.0 % HEA; 0.5 % AS; 34.5 % n-BA; 10.0 % S
Initiator: 3.0 % t-BPO; 0.5 % t-BPB
Lösungsmittel: Butylacetat
Vorlage: 1000.0 g V2
   100.0 g Butylacetat

| Menge Zulauf 1: | Menge Zulauf 2: |
|---|---|
| 196.0 g Methylmethacrylat | 210.0 g Butylacetat |
| 189.0 g Hydroxyethylacrylat | 3.5 g t-Butylperbenzoat |
| 3.5 g Acrylsäure | 21.0 g t-Butylperoktoat |
| 241.5 g n-Butylacrylat | |
| 70.0 g Styrol | |

Die Durchführung entsprach V9.

### B3 (70 % V2 vorgelegt)

Monomere: 28.0 % % MMA; 27.0 % HEA; 0.5 % AS; 34.5 % n-BA; 10.0 % S
Initiator: 3.0 % t-BPO; 0.5 % t-BPB
Lösungsmittel: Butylacetat
Vorlage: 1400.0 g V2

| Menge Zulauf 1: | Menge Zulauf 2: |
|---|---|
| 117.6 g Methylmethacrylat | 185.0 g Butylacetat |
| 113.4 g Hydroxyethylacrylat | 2.1 g t-Butylperbenzoat |
| 2.1 g Acrylsäure | 12.6 g t-Butylperoktoat |
| 144.9 g n-Butylacrylat | |
| 42.0 g Styrol | |

Die Durchführung entsprach V9.

Bestimmung der mittleren Molekulargewichte Mₙ und M_{w} und der Molekulargewichtsverteilung:

Das Gewichtsmittel M_{w} des Molekulargewichts und das Zahlenmittel Mₙ des Molekulargewichts wurden durch Gelpermeationschromatographie (GPC) bestimmt, wobei Polystyrol als Standard verwendet wurde

Die Methode ist z.B. beschrieben im Analytiker Taschenbuch Bd. 4, Seiten 433 bis 442 (Berlin 1984).

### Bestimmung des Festgehalts (FG) und der Pendelhärte:

Die hydroxyfunktionellen Vinylpolymerisate der Vergleichsbeispiele und Beispiele wurden entsprechend einem OH/NCO-Verhältnis von 1:1 mit Basonat® PLR 8781, einem Polyisocyanatvernetzer der BASF AG, versetzt und mit Butylacetat eine Applikationsviskosität von 20 s (DIN 53 211 Becher 4 mm Auslaufdüse) eingestellt. Die Festgehalte wurden nach DIN V 53 216 1. Teil bestimmt.

Mit einer Rakel wurden auf Glasplatten Beschichtungen mit einer Naßfilmdicke von 200 µm aufgetragen. Die so erhaltenen Lacke wurden 7 Tage unter Normklima gehärtet. Die resultierende Härte der Lacke wurde mittels Pendeldämpfungsmessung nach König (DIN 53 157) bestimmt.

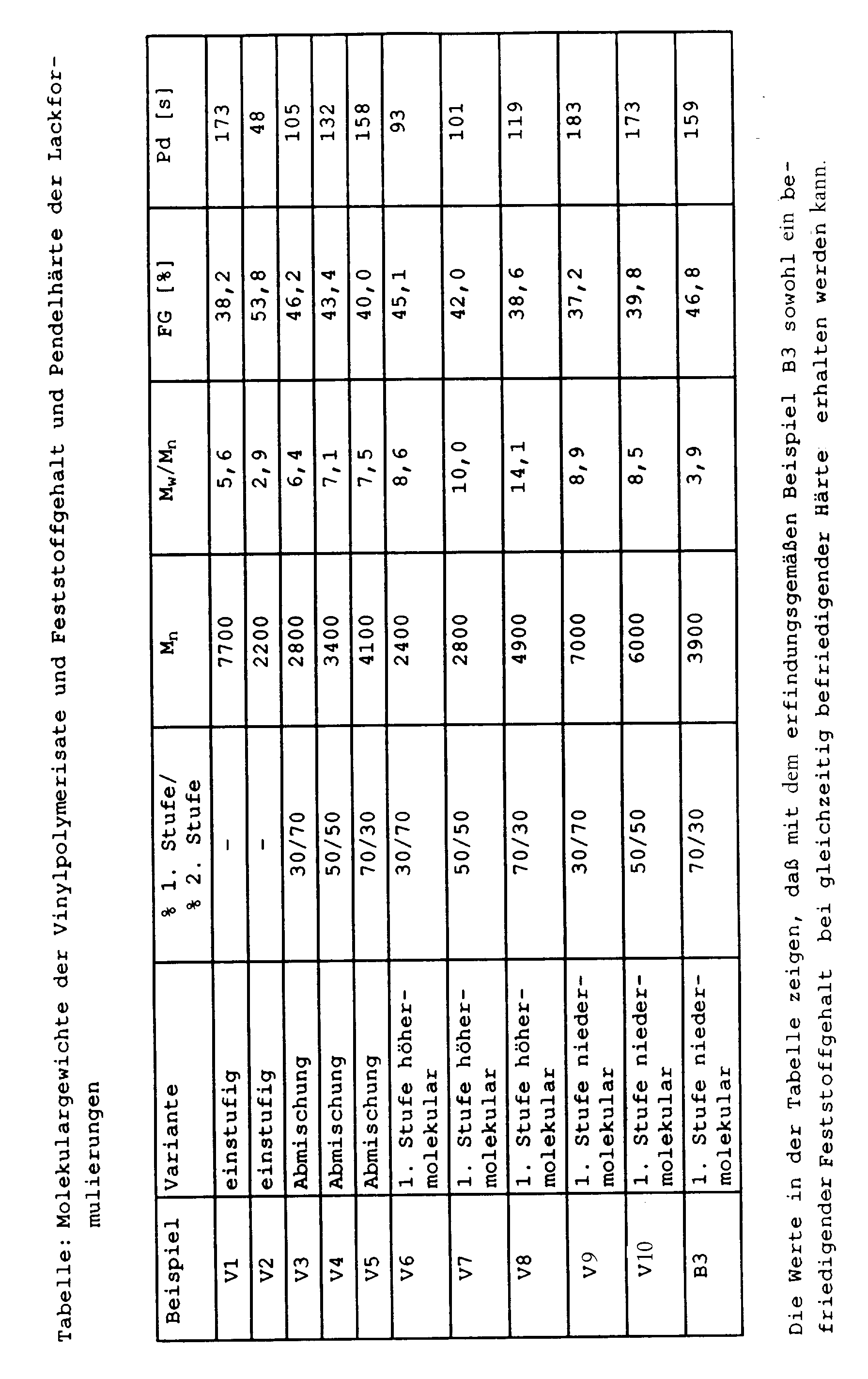

## Patentansprüche

1. Vinylpolymerisat, erhältlich durch Polymerisation von Vinylmonomeren in mindestens zwei Stufen in einem organischen Lösungsmittel oder in Substanz, wobei in der ersten Stufe 65 bis 80 Gew.-% der Vinylmonomeren polymerisiert werden und in der zweiten Stufe 20 bis 35 Gew.-% der Vinylmonomeren in Gegenwart des in der ersten Stufe erhaltenen Vinylpolymeren polymerisiert werden, mit der Maßgabe, daß die Polymerisation in der zweiten Stufe unter Bedingungen durchgeführt wird, bei denen sich für die Vinylmonomeren der zweiten Stufe in Abwesenheit des in der ersten Stufe erhaltenen Vinylpolymeren ein gegenüber dem Vinylpolymeren der ersten Stufe um mindestens 1000 höheres mittleres Molekulargewicht Mₙ ergibt und wobei die Polymerisation der Vinylmonomeren in der ersten Stufe bei einer Temperatur zwischen 130 und 250°C und die Polymerisation der Vinylmonomeren in der zweiten Stufe in Gegenwart des Vinylpolymeren der ersten Stufe bei einer Temperatur zwischen 80 und 200°C durchgeführt wird und die Temperatur in der ersten Stufe mindestens 25°C höher ist als in der zweiten Stufe.

2. Vinylpolymerisat nach Anspruch 1, wobei das mittlere Molekulargewicht Mₙ des in der ersten Stufe hergestellten Vinylpolymeren 500 bis 20 000 beträgt und die Polymerisation der Vinylmonomeren in der zweiten Stufe unter Bedingungen durchgeführt wird, bei denen sich für die Vinylmonomeren der zweiten Stufe in Abwesenheit des in der ersten Stufe erhaltenen Vinylpolymeren ein mittleres Molekulargewicht Mₙ von 2 000 bis 100 000 ergibt und dieses Molekulargewicht mindestens um 1 000 höher ist, als das des Vinylpolymeren der ersten Stufe.

3. Vinylpolymerisat nach einem der Ansprüche 1 oder 2, wobei sich die Vinylmonomeren insgesamt zusammensetzen aus

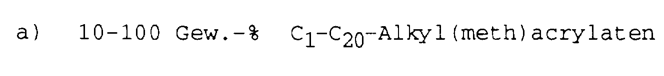

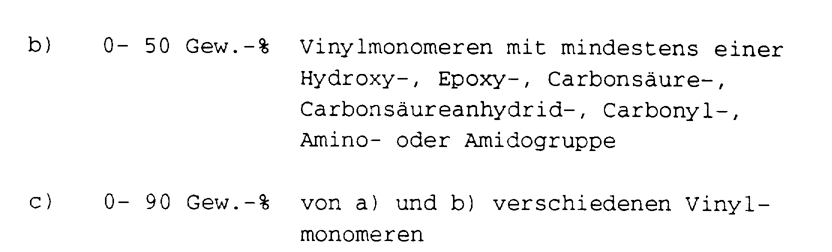

4. Vinylpolymerisate nach einem der Ansprüche 1 bis 3, wobei der Gewichtsanteil der Monomeren in der 1. Stufe 35 bis 90 Gew.-% und der Monomeren in der 2. Stufe 10 bis 65 Gew.-%, jeweils bezogen auf das Vinylpolymerisat, beträgt.

5. Verfahren zur Herstellung eines Vinylpolymerisats gemäß Anspruch 1, dadurch gekennzeichnet, daß die Vinylmonomeren in mindestens zwei Stufen in einem organischen Lösungsmittel oder in Substanz polymerisiert werden, wobei in der ersten Stufe 65 bis 80 Gew.-% der Vinylmonomeren polymerisiert werden und in der zweiten Stufe 20 bis 35 Gew.-% der Vinylmonomeren in Gegenwart des in der ersten Stufe erhaltenen Vinylpolymeren polymerisiert werden, mit der Maßgabe, daß die Polymerisation in der zweiten Stufe unter Bedingungen durchgeführt wird, bei denen sich für die Vinylmonomeren der zweiten Stufe in Abwesenheit des in der ersten Stufe erhaltenen Vinylpolymeren ein gegenüber dem Vinylpolymeren der ersten Stufe um mindestens 1000 höheres mittleres Molekulargewicht Mₙ ergibt und die Polymerisation der Vinylmonomeren in der ersten Stufe bei einer Temperatur zwischen 130 und 250°C und die Polymerisation der Vinylmonomeren in der zweiten Stufe in Gegenwart des Vinylpolymeren der ersten Stufe bei einer Temperatur zwischen 80 und 200°C durchgeführt wird und die Temperatur in der ersten Stufe mindesten 25°C höher ist als in der zweiten Stufe.

6. Verwendung des Vinylpolymerisats gemäß einem der Ansprüche 1 bis 5 als Lackbindemittel.

7. Mit einem Vinylpolymerisat gemäß einem der Ansprüche 1 bis 4 beschichtete Substrate.

## Claims

1. A vinyl polymer obtainable by polymerizing vinyl monomers in at least two stages in an organic solvent or in the absence of a solvent, wherein, in the first stage, from 65 to 80% by weight of the vinyl monomers are polymerized and, in the second stage, from 20 to 35% by weight of the vinyl monomers are polymerized in the presence of the vinyl polymer obtained in the first stage, with the proviso that the polymerization in the second stage is carried out under conditions under which an average molecular weight Mₙ which is at least 1000 higher compared with that of the vinyl polymer of the first stage results for the vinyl monomers of the second stage in the absence of the vinyl polymer obtained in the first stage, and the polymerization of the vinyl monomers in the first stage is carried out at from 130 to 250°C and the polymerization of the vinyl monomers in the second stage is carried out in the presence of the vinyl polymer of the first stage at from 80 to 200°C and the temperature in the first stage is at least 25°C higher than that in the second stage.

2. A vinyl polymer as claimed in claim 1, wherein the average molecular weight Mₙ of the vinyl polymer prepared in the first stage is from 500 to 20,000 and the polymerization of the vinyl monomers in the second stage is carried out under conditions under which an average molecular weight Mₙ of from 2000 to 100,000 results for the vinyl monomers of the second stage in the absence of the vinyl polymer obtained in the first stage, and this molecular weight is at least 1000 higher than that of the vinyl polymer of the first stage.

3. A vinyl polymer as claimed in claim 1 or 2, wherein the vinyl monomers together are composed of
| | | |
|---|---|---|
| a) | 10-100% by weight | of C₁-C₂₀-alkyl (meth)acrylates |
| b) | 0-50% by weight | of vinyl monomers having at least one hydroxyl, epoxy, carboxyl, carboxylic anhydride, carbonyl, amino or amido group |
| c) | 0-90% by weight | of vinyl monomers which differ from a) and b). |

4. A vinyl polymer as claimed in any of claims 1 to 3, wherein the amount of the monomers in the 1st stage is from 35 to 90% by weight and that of the monomers in the 2nd stage is from 10 to 65% by weight, based in each case on the vinyl polymer.

5. A process for the preparation of a vinyl polymer as claimed in claim 1, wherein the vinyl monomers are polymerized in at least two stages in an organic solvent or in the absence of a solvent, by a procedure in which, in the first stage, from 65 to 80% by weight of the vinyl monomers are polymerized and, in the second stage, from 20 to 35% by weight of the vinyl monomers are polymerized in the presence of the vinyl polymer obtained in the first stage, with the proviso that the polymerization in the second stage is carried out under conditions under which an average molecular weight Mₙ which is at least 1000 higher compared with that of the vinyl polymer of the first stage results for the vinyl monomers of the second stage in the absence of the vinyl polymer obtained in the first stage, and the polymerization of the vinyl monomers in the first stage is carried out at from 130 to 250°C and the polymerization of the vinyl monomers in the second stage is carried out in the presence of the vinyl polymer of the first stage at from 80 to 200°C and the temperature in the first stage is at least 25°C higher than that in the second stage.

6. The use of a vinyl polymer as claimed in any of claims 1 to 5 as a surface coating binder.

7. A substrate coated with a vinyl polymer as claimed in any of claims 1 to 4.

## Revendications

1. Polymère vinylique, pouvant être obtenu par polymérisation en au moins deux étapes de monomères vinyliques, tels quels ou dans un solvant organique, dans la première étape 65 à 80 % en poids des monomères vinyliques étant polymérisés et, dans la seconde étape, 20 à 35 % en poids des monomères vinyliques étant polymérisés en présence du polymère vinylique obtenu dans la première étape, étant entendu que la polymérisation dans la seconde étape est effectuée dans des conditions dans lesquelles il résulte pour les monomères vinyliques de la seconde étape, en absence du polymère vinylique obtenu dans la première étape, une masse moléculaire moyenne Mₙ supérieure d'au moins 1 000 à celle du polymère vinylique de la première étape, et la polymérisation des monomères vinyliques dans la première étape étant effectuée à une température comprise entre 130 et 250°C, et la polymérisation des monomères vinyliques dans la seconde étape, en présence du polymère vinylique de la première étape, étant effectuée à une température comprise entre 80 et 200°C, et la température dans la première étape étant supérieure d'au moins 25°C à celle dans la seconde étape.

2. Polymère vinylique selon la revendication 1, dans lequel la masse moléculaire moyenne Mₙ du polymère vinylique produit dans la première étape va de 500 à 20 000 et la polymérisation des monomères vinyliques dans la seconde étape est effectuée dans des conditions dans lesquelles il résulte pour les monomères vinyliques de la seconde étape, en absence du polymère vinylique obtenu dans la première étape, une masse moléculaire moyenne Mₙ de 2 000 à 100 000, et cette masse moléculaire est supérieure d'au moins 1 000 à celle du polymère vinylique de la première étape.

3. Polymère vinylique selon la revendication 1 ou 2, dans lequel les monomères vinyliques se composent au total de
| | | |
|---|---|---|
| a) | 10-100 % en poids | de (méth)acrylates d'alkyle en C₁-C₂₀, |
| b) | 0- 50 % en poids | de monomères vinyliques comportant au moins un groupe hydroxy, époxy, carboxy, anhydride d'acide carboxylique, carbonyle, amino ou amido, |
| c) | 0- 90 % en poids | de monomères vinyliques différents de a) et b). |

4. Polymères vinyliques selon l'une des revendications 1 à 3, dans lesquels la proportion en poids des monomères dans la première étape va de 35 à 90 % en poids et celle des monomères dans la seconde étape va de 10 à 65 % en poids, dans chaque cas par rapport au polymère vinylique.

5. Procédé pour la préparation d'un polymère vinylique selon la revendication 1, caractérisé en ce que les monomères vinyliques sont polymérisés en au moins deux étapes, tels quels ou dans un solvant organique, dans la première étape 65 à 80 % en poids des monomères vinyliques étant polymérisés et, dans la seconde étape, 20 à 35 % en poids des monomères vinyliques étant polymérisés en présence du polymère vinylique obtenu dans la première étape, étant entendu que la polymérisation dans la seconde étape est effectuée dans des conditions dans lesquelles il résulte pour les monomères vinyliques de la seconde étape, en absence du polymère vinylique obtenu dans la première étape, une masse moléculaire moyenne Mₙ supérieure d'au moins 1 000 à celle du polymère vinylique de la première étape, et la polymérisation des monomères vinyliques dans la première étape étant effectuée à une température comprise entre 130 et 250°C, et la polymérisation des monomères vinyliques dans la seconde étape, en présence du polymère vinylique de la première étape, étant effectuée à une température comprise entre 80 et 200°C, et la température dans la première étape étant supérieure d'au moins 25°C à celle dans la seconde étape.

6. Utilisation du polymère vinylique selon l'une des revendications 1 à 5, en tant que liant pour peintures.

7. Support revêtu avec un polymère vinylique selon l'une des revendications 1 à 4.
